# EUROPEAN PATENT SPECIFICATION

(11) **EP 0 765 295 B1**
(45) Date of publication and mention of the grant of the patent: **29.03.2000**
(21) Application number: 95924234.8
(22) Date of filing: 14.06.1995
(51) Int. Cl.: C03C 13/06, C03C 1/02, C03B 1/02

(54) **PRODUCTION OF MINERAL FIBERS**
HERSTELLUNG VON MINERALFASERN
PRODUCTION DE FIBRES MINERALES

(30) Priority: 15.06.1994 GB 9412007
(43) Date of publication of application: 02.04.1997
(73) Proprietor: Rockwool International A/S, DK-2640 Hedehusene (DK)
(72) Inventor: SORENSEN, Lone, Moller, DK-3460 Birkerod (DK); CHRISTENSEN, Vermund, Rust, DK-4000 Roskilde (DK); JENSEN, Soren, Lund, DK-2840 Holte (DK); HOYER, Hans, DK-4000 Roskilde (DK); FAARBORG, Jorgen, Porthcawl, Mid Glamorgan CF36 3LB (GB); SWEENY, Philip, Brynmenyn, Mid Glamorgan CF32 9AQ (GB)
(74) Representative: Lawrence, Peter Robin Broughton
(86) International application number: EP9502305
(87) International publication number: WO9534517

(56) References cited:
- WO-A-92/04289
- WO-A-94/14717
- DE-A- 4 306 438
- FR-A- 1 191 329
- FR-A- 2 690 438
- US-A- 2 578 110
- US-A- 2 970 924
- US-A- 2 976 162

## Description

This invention relates to the production of man made vitreous fibres (MMVF) that are biologically soluble, that is to say they have an acceptable rate of biologically useful degradation in physiological saline solution. MMV fibres are fibres made from a vitreous melt, such as of rock, slag, glass or other mineral melt. The invention also relates to novel briquettes.

It is standard practice to manufacture MMV fibres by a process comprising forming briquettes of particulate mineral material, forming a melt by melting in a furnace a charge comprising the briquettes (optionally with other mineral materials) and forming the fibres from the melt.

Many methods are known for forming shaped bonded bodies of particulate mineral material. For instance mineral ore can be pelletised by being tumbled with a binder in the presence of moisture, and molded briquettes can be made by various techniques. A general review of these moulding techniques was given by John D Higginbotham at a meeting in Seattle USA in October 1993 in a paper entitled "Molasses as an Environmentally Acceptable Briquette and Agglomerate Binder". In this paper Dr Higginbotham reviewed the use of, for instance, starch, polyvinyl alcohol, lignin sulphonate, lime, resins and molasses with phosphoric acid as binders for briquetting a range of inorganic particulate materials. He commented that when lignin is used for the agglomeration of carbon black, it begins to decompose at 250°C giving poorer particle adhesion.

In US 2,578,110 briquettes of glass batch are moulded from very finely divided inorganic material, water and optionally glucose, bentonite or other material as binder, and are then heated in an oven for 1/2 hour to 3 hours. The resultant briquettes are melted in a tank to provide a glass melt. In US 2,970,924, lignosulphonic acid salts are used as binder in the pelletising of glass batch for the manufacture of fibre glass. Accordingly this does not involve making briquettes by moulding. The intention is that the pellets will melt faster and more evenly and that there will be improved heat transfer through the melted batch. The briquettes and pellets in these two references are added into the melt and do not have to be significantly self-supporting while they are melting.

In conventional furnaces for providing the melt from which MMV fibres are formed, the melt is made by melting in the furnace a self-supporting column of solid coarse mineral material. This solid coarse material can consist of raw crushed rock but often comprises briquettes formed of finer particulate mineral material. It is necessary that the column shall be self-supporting in order to hold the solid material above melt in the base of the furnace. It is therefore necessary that any briquettes which are included in the charge should retain their integrity while being heated up to near the melt temperatures (which exceed 1,000°C). Disintegration of the briquettes at lower temperatures, of only a few hundred °C, is unsatisfactory since the briquettes will disintegrate into powder and the column of coarse material will tend to collapse resulting in increased resistance to the combustion air, increased pressure and pressure variations in the bottom disturbing the flow of melt through the outlet.

It is therefore necessary that the briquettes should be heat resistant in the sense that the briquettes retain their briquette structure for as long as possible while they are being heated in the furnace up towards the melting temperature. It is also necessary that it should be possible to make the briquettes by a simple process that avoids the long (several days) curing time needed for hydraulic binders. It would be desirable for the briquettes to have a high green strength, that is to say it would be desirable to be able to handle the briquettes very soon after manufacture, without any curing process and without risk of the fresh briquettes disintegrating.

In US 2,976,162, briquettes are formed using a mixture of clay (such as bentonite) and starch. Although these may be intended to give adequate green strength and strength in the furnace (due to the clay) this system appears to be unsatisfactory and has not been widely adopted. Instead, the attainment of adequate heat resistance and strength has conventionally been achieved by bonding the briquettes using a hydraulic binder, generally cement. This has a significant content of aluminium and so the resultant briquettes, and therefore the charge, inevitably contain a significant aluminium content irrespective of the alumina content of the particulate material that is used for making the briquettes. Similarly, the binder system of US 2,976,162 inevitably carries alumina into the briquettes (due to the alumina content of the clay).

In W092/04289 it is noted that the presence of a large amount of alumina is not advantageous when a high degree of solubility of the fibre is desired and it is proposed to allow minimisation of the Fe and Al concentrations in the melt by using briquettes in which the binder contains slag which has been activated with an alkaline agent. An analysis that is given of a typical slag for this process shows that it contains 38.1% CaO, 35.1% SiO₂, 12.2% MgO, 7.6% Al₂O₃, and minor components. The incorporation of this slag, and of its alkaline activator, necessarily carries into the melt alumina, alkali metal and other components in significant and unavoidable amounts.

It is stated in W092/04289 that the briquettes are made by mixing water, alkaline solution and the dry briquette components and then forming the mixture in known manner into briquettes. The only detailed methods which are mentioned are compressing and compression vibration, which probably is intended to refer to casting methods of the type conventionally used when the binder is cement.

It is known that the solubility of mineral fibres in physiological saline solutions can be increased by appropriate selection of the composition of the melt. As a generality, best results at pH 7.5 are sometimes alleged when the amount of aluminium in the melt, measured as oxides, is below 3 or 4% (preferably not more than 1 or 2% by weight Al₂O₃). Accordingly, if biological solubility in saline at pH 7.5 is required the mineral material for forming the briquettes, and any additional material that is included in the charge, has to be selected so that it complies both with the required low aluminium content and with the requirement that the melt has appropriate melt properties. Thus the charge must result in a melt-having appropriate melting temperature and viscosity characteristics such that the melt has appropriate fibre-forming properties.

Many minerals that might otherwise be considered to be suitable for the manufacture of low Al₂O₃ MMV fibres have an alumina content that is sufficiently high that even if those minerals alone were used the final analysis of the MMV fibres would have an alumina value that is higher than the 3 or 4% limit that is desired. The fact that, in practice, it is necessary to add also conventional inorganic briquetting binder such as cement or alkali slag or clay places a further restriction on the particulate minerals that can be used.

A still further restriction is imposed by the fact that the particulate material needs to be relatively coarse if satisfactory strength is to be obtained using conventional binders such as cement. For instance at least 10% by weight of the particles normally have to be above 2mm or even 5mm, and frequently 30% have to be above lmm. Satisfactory results are not obtained with hydraulic and other conventional binders when the particle size is uniformly small, for instance below lmm. Since the composition must melt within the furnace in a predetermined time, the relatively coarse particles must have a composition which will melt rapidly at the furnace temperature and/or must be associated with a fluxing agent. It is difficult to provide economic, relatively coarse, materials or blends that meet all these requirements and which have low alumina content. There are some readily available very fine low alumina content materials, such as many sands, but these have too small a particle size and often have too high a melting point to be capable of giving satisfactory briquettes by conventional briquetting binding and moulding techniques.

Another constraint in the selection of materials for the charge is that their use should not result in other problems in the furnace or in gaseous or other discharges from the process.

There are therefore serious constraints on the selection of particulate mineral material that can be used for forming briquettes that are to constitute part or all of the charge to a furnace for making MMV fibres which have a low Al₂O₃ content. It would therefore be desirable to devise a very simple and easy to perform method of making briquettes from materials that are more readily available and cost-effective and yet which can be used to form MMV fibres having desirable characteristics, especially good solubility in body fluids and low alumina content.

According to the invention, MMV fibres having low Al₂O₃ content are made by forming moulded briquettes of particulate mineral material, forming a melt by melting in a furnace a self supporting column of solid coarse mineral material comprising the briquettes and forming fibres from the melt, and in this process the melt and the fibres have a content, measured as oxides, of below 4% by weight Al₂O₃, and at least 50% by weight of the mineral material is lignin-bonded briquettes which have a content of below 4% Al₂O₃ and which have been made by compression moulding of particulate mineral material, having a size at least 90% by weight below 2mm, with a binder that is substantially free of aluminium and that comprises lignin in an amount of 1 to 10% based on the total weight of the mix of lignin binder solution and particulate material.

The lignin-bonded briquettes can be bonded by a mixed binder that contains both lignin and secondary binder provided the nature and amount of the secondary binder is such that the total binder system is substantially free of aluminium (for instance contributing less than 0.5%, and preferably less than 0.1%, Al₂O₃ to the charge). Preferably the binder consists substantially only of organic binder, although a small amount of inorganic binder can be tolerated in some processes.

Secondary organic binders that may be used include, for instance, starch, synthetic resins such as phenolformaldehyde, and molasses, and when molasses is being used it is preferably used in combination with lime. The lignin preferably provides at least 30% and usually at least 60% (dry weight) of the total binder system.

The lignin binder is preferably calcium lignosulphonate. The lignosulphonate advantageously is derived as a by-product from wood pulping. Conveniently the lignosulphonate binder that is used in the invention can be the same type of commercial material as is conventionally used as a plasticiser for clay or a dispersant for agricultural chemicals. A suitable grade of material is sold under the trade name Borrespherse CAFN.

The briquettes are normally made by mixing the particulate mineral material (and optionally vegetable fibres) with a solution of the lignin binder, allowing the mixture to stiffen and then moulding the mixture. If a supplementary binder is being used, it is generally included as a mixture with the lignin.

The initial mixing of the particulate mineral material with the aqueous solution of the binder can be achieved by blending the mineral material (and optionally vegetable fibres) with powdered lignin binder and water, with the result that the powdered binder dissolves during the mixing. Alternatively the mixing may be by blending the particulate mineral material with a solution of the lignin binder.

The total amount of moisture in the mix is usually in the range 0.5 to 10%, preferably 1 to 5%. The total amount of lignin is in the range 1 to 10%, often 2 to 5%, based on the total weight of the mix.

The mixing can be by any convenient mixing means. For instance a star mixer or rotary mixer may be used or mixing may be achieved by passing the mix through a screw conveyor.

If the lignin binder is being applied as a preformed solution, it may be convenient to hold the solution at a slightly elevated temperature (e.g., 20 or 30 to 70°C) in order to reduce the viscosity of the solution, but the conditions of storage must be such that polymerisation or degradation of the binder does not start during storage.

The mix of lignin binder solution and particulate material is preferably allowed to stiffen (ie. become significantly more viscous and resistant to mixing) before it is moulded. In order to accelerate this effect, it is desirable to heat the mix. This may be achieved by application of heat during the mixing. Thus the apparatus that is used for the mixing may include internal heaters such as heated paddle mixers that will promote heating and/or may include external heaters or a water jacket by which hot water can be circulated around the apparatus during the mixing.

Generally the mix has an internal temperature in the range 20 to 70°C during the mixing with the binder since this promotes stiffening of the mix. This stiffening may be due to chemical cure but generally is due to evaporation of moisture from the mixture during the mixing.

Simple mixing in this manner is appropriate when the particulate material already has the desired ultimate particle size range. However when some or all of the particulate material is too coarse, the mineral material is preferably crushed during the mixing. Crushing during the mixing has the advantage that heat energy that is generated during the crushing will cause the desired increase in temperature.

A particularly preferred process according to the invention comprises simultaneously mixing, crushing and heating the mix of mineral and binder (and optionally fibres) by a crushing process that also provides mixing. Preferably this is achieved by use of a rod mill. For instance the mixing and crushing can be conducted for an appropriate residence time, such as 10 to 20 minutes, to achieve the desired particle size and optimum mixing of the binder with the particulate material.

Crushing and mixing in this way is particularly advantageous not only because it is an economic way of generating the warm mix but also because it achieves an extremely high surface coverage of the particles with a minimum amount of the binder.

Once the mix has the desired properties (for instance particle size and stiffness), it is ready for moulding and should be moulded before it dries or otherwise cures sufficiently that it becomes too stiff to charge adequately into the moulds.

The moulding can be by any suitable compression moulding technique. It is strongly preferred that the moulding should be by means of a roller press. A roller press mould comprises a pair of rolls that rotate together to define a nip, with mould recesses in at least one of the rolls or, usually, with matching mould recesses in both of the rolls. The rolls can have a substantial axis length or may be wheels. Roller briquetting presses of this general type are well known for the purpose of pelletising animal feedstuffs or for making fuel briquettes,

The pressure applied on the mix in the mould is often in the range of 10 to 50 kN per line cm.

The dimensions of the recesses dictate the dimensions of the briquettes that are obtained. Generally each briquette has a minimum dimension of at least 5mm and usually at least 40mm. The maximum dimension can be up to, for instance, 200mm but is usually not more than 150mm. An advantage of the invention is that very rapid bonding is achieved with the result that the products have adequate strength when they are discharged from the briquetting apparatus (which occurs very rapidly). They acquire substantially full strength within a short period, for instance not more than about 2 hours, and often 1/4 hour to 1 hour, from the initial mixing of the binder and the particulate material. They acquire this strength without needing to be heat cured in an oven. Instead they are normally allowed to stand exposed to the atmosphere. Accordingly the briquettes do not require prolonged storage (as is required with conventional binders) to allow hydraulic bonding to occur but can, instead, be handled and used almost immediately after moulding.

The melt temperature in the furnace is usually in excess of 1,400°C and the melting point of the briquettes is generally above 1,100°C or above 1,200°C. The lignin binder is particularly advantageous in this respect in that briquettes made using such binders are generally sufficiently resistant that they maintain adequate strength until the briquette melts.

Another advantage of the lignin binders is that materials volatilised during the curing and melting of the binders are of a type that can easily be processed using the conventional gas treatment systems that would normally be associated with the furnace.

An important advantage of the invention is that good bonding and briquettes can be achieved with fine particulate material. Although it is possible to perform the invention usefully with particulate material having size at least 90% below 2mm, preferably the size of the particulate material is less than this. For instance usually at least 98%, and preferably 100%, by weight is below 2mm. In particular, preferably at least 80%, for instance 50-80%, is below 1mm and most preferably below 0.5mm. The presence of some coarser material, eg at at least 20% above lmm, is desirable. The particulate material is often mainly above 0.1mm and usually mainly above 0.2mm.

A variety of inorganic particulate mineral materials can be used in the bonded briquettes. As mentioned above, a particular advantage of the use of lignin binders compared to conventional hydraulic binders is that good results can be obtained even though the particle size is small. When using a hydraulic binder, it is necessary to include a significant amount of coarse material in the mix in order that the briquette has adequate strength. In the invention, however, this is not required and so the particulate material substantially consists of material having a particle size smaller than is conventional for MMVF briquettes.

The use of this fine particle size has two significant advantages. First, it allows, under equal residence time and temperature conditions in the furnace, more rapid melting than is permissible with conventional coarser particle size materials and it allows the use of higher melting point materials. For instance at least 70% by weight of the components of the inorganic material may be materials with a melting point above 1450°C. Second, it allows the use of low Al₂O₃ materials that are readily available in a very fine particulate form, notably sand. Thus, if desired, in the invention the entire particulate material in the briquettes can be sand. The fine particle size also minimises or eliminates the need to incorporate fluxing agents, and thus avoids the constraints they provide on the choice of chemical composition.

Suitable fines that can be used include stone fines (such as slag fines conventionally generated in the preparation of minerals for mineral melt production), glass waste, iron ore, used foundry sand, and various MMV waste fibrous materials, for instance that are waste from the fibre-forming process or are unused or waste final product. Prior to the invention it has often not been possible to use MMV waste in significant amounts. Such fibrous materials include spinner waste from the spinning process and the spinning chamber, dry wool waste that is waste cured fibre products such as waste parts of slabs, rolls, pipe sections and so forth, wet wool waste which is uncured wool due to stops in the manufacturing process and other discontinuities in production, and filter mats.

Instead of or in addition to the inclusion of inorganic fibres, it is desirable to include organic fibre in the mixture from which the briquettes are formed. Preferred organic fibres are vegetable (including wood) fibres, especially paper fibres, seaweed fibres, citrous waste and straw. The use of straw is advantageous in that it can be introduced dry, and thus does not influence the moisture content of the mix from which the briquettes are formed whereas the other fibres may be introduced most conveniently in wet form, in which even their introduction into the mix will influence the moisture content of the mix. The use of the vegetable fibres can result in improved green strength in the briquettes and can result in satisfactory or improved green strength being attained over an increased range of moisture contents. The amount of vegetable or other organic fibres is generally from 0.2 to 10 parts, often around 0.5 to 5 parts, per part by weight lignin (dry weight). The straw is usually cut or chopped to a length not more than about 5 or 10mm and this is a suitable maximum for all vegetable fibres.

The particulate mineral material for forming the briquettes may be crushed mineral material or naturally occurring fine particulate mineral material. Suitable materials are high melting components such as quartz, olivine sand, limestone, dolomite, rutile, magnesite, magnetite, and brucite. Other conventional components for MMVF briquettes such as other slag, rock and mineral products can be used.

The mineral materials selected for forming the briquettes will be chosen having regard to the chemical analysis and melting properties that are required. Generally below 75%, and often below 20% by weight of the briquette is molten at 1250°C but usually the briquette is totally melted at 1300°C and often at 1375°C.

The chemical analysis of the briquettes is preferably such that the aluminium content is below 4%, most preferably below 2% and generally below 1%. The combined amount of Na₂O and K₂O is generally not more than 6% and is preferably below 4%. The combined amount of FeO + MgO + CaO is preferably below 50%.

The mineral charge in the furnace may consist solely of the organic bonded briquettes or up to 50% by weight, usually not more than 20% or 30% by weight, of the mineral charge may be introduced in some other form. For instance some of the charge may include briquettes bonded in some other manner, for instance using cement, or may include conventional components for forming MMV fibre melts, such as rock, slag, glass waste and other conventional materials. If such materials are not introduced as briquettes, they are normally introduced in a form having a particle size generally in the range 40mm to 160mm. These supplementary materials, in use, generally have a content of aluminium of not more than 6% maximum, preferably below 4%.

The total charge should have a content of Al₂O₃ below 4%, generally below 2% and preferably below 1%.

The melt may contain, either in the organic bonded briquettes or in the remainder of the charge, components that are known to be useful to promote solubility such as phosphorous and boron compounds generally in a total amount of not more than 10 to 20% (measured as oxides).

A preferred composition of the fibres and melt, and often also the briquettes,is 45-60% SiO₂, 0.5-4% Al₂O₃, 0.1-4% TiO₂, 5-12% FeO, 10-25% CaO, 8-18% MgO, 0-4% Na₂O, 0-2% K₂O, 0-6% Na₂O + K₂O, 2-10% P₂O₅ and 0-10% others.

The furnace may be any furnace in which the melt is provided by melting a self supporting column of solid coarse mineral material comprising the briquettes. This column is often at least 1 metre high. The furnace may be an electrical furnace or a tank furnace or, preferably, it is a cupola furnace in which combustible material is included in the charge. The melt temperature will depend upon the minerals being used and the fibre-forming technique but is generally in the range 1200 to 1600°C, often around 1400 to 1550°C.

Fibre formation can be by conventional techniques such as a spinning cup technique or, preferably, by pouring on to a spinner comprising at least two co-operating spinning wheels, for instance as described in W092/06047. Thus the fibres may be made by pouring the melt on to a first spinning rotor from which the melt is thrown in sequence on to one or more subsequent spinning rotors off which the fibres are thrown.

The products of the invention can be used for any of the conventional uses of MMV fibres, such as thermal insulation, noise reduction and regulation, fire protection, growth media, reinforcement and fillers.

In each of the following examples, the inorganic materials and organic fibres that are listed are subjected to crushing in a rod mill and, at the start of the crushing, aqueous solution of the lignin binder is added in an amount such that the mix has a water content of 12% and a lignin (dry weight) content of 4%. The crushing is continued for from 10-20 minutes at which the mix has a temperature in the range 20-50°C and has a particle size at least 98% below 2mm and at least 80% below 1mm and at least 50% below 0.5mm. The mix is to be heated in a paddle mixer in which the moisture content drops to 1-3%. Alternatively the mix can be dried in a fluid bed drier at 60°C to the same moisture content. The mix is passed to the moulding cavities of a roller press in which the mix is pressed at a pressure above 20 kN per line cm into briquettes which can have a size typically of 100mm by 50mm. The briquettes are discharged from this press within a few minutes of the particulate mix being charged into the prefeeder. The briquettes have adequate green strength to allow reasonable handling immediately upon removal from the moulds. They are allowed to stand for about half an hour by which time they appear to have acquired additional strength.

In each instance the briquettes are charged into a cupola furnace that is also charged with coke as fuel. The briquettes constitute the sole mineral charge to the furnace. The melt temperature from the furnace is 1510°C. The melt runs from the furnace on to the upper spinning rotor of a spinner broadly described in W092/06047. The resultant MMV fibres are collected as a mat and may be bonded using organic binder in conventional manner.

### Example 1

7% Iron ore
10% Dolomite
27% Lime
42% Silica sand
14% Olivine sand
and lignin binder
giving the fibre chemistry (components in w/w %):

| SiO2 | Al₂O₃ | TiO₂ | FeO | CaO | MgO | Na₂O | K₂O |
|---|---|---|---|---|---|---|---|
| 59.3 | 0.8 | 0.2 | 6.4 | 19.9 | 11.8 | 0.1 | 0.5 |

### Example 2

10% Dolomite
34% Lime
42% Silica sand
14% Olivine sand
and lignin binder
giving the fibre chemistry (components in w/w %):

| SiO2 | Al₂O₃ | TiO₂ | FeO | CaO | MgO | Na₂O | K₂O |
|---|---|---|---|---|---|---|---|
| 60.4 | 0.8 | 0.2 | 1.0 | 24.5 | 11.7 | 0.1 | 0.5 |

### Example 3

18% Dolomite
26% Lime
26% Silica sand
10% Olivine sand
20% Mineral wool waste (diopsid composition)
and lignin binder
giving the fibre chemistry (components in w/w %):

| SiO2 | Al₂O₃ | TiO₂ | FeO | CaO | MgO | Na₂O | K₂O |
|---|---|---|---|---|---|---|---|
| 52.0 | 0.8 | 0.2 | 0.8 | 28.7 | 16.0 | 0.3 | 0.2 |

### Example 4

A process substantially as in Examples 1 to 3 is conducted using briquettes formed from 7% quartz sand, 33% olivine sand, 48% low-alumina mineral fibres and 12% apatite together with 6% calcium lignosulphonate solution. Additional moisture is added to the mix in some experiments. Wet paper-waste is added in some experiments to provide amounts of paper of 9.6% dry matter or 19.1% dry matter.

The strength of the briquette after curing for 60 minutes is recorded.

When the mix is free of paper waste and has a humidity of 1 to 2% at the time of compression, it has a strength of about 5.5 kN but when the moisture content at the time of compression is around 4% it has a strength of about 1.3 kN.

In the experiments using wet paper-waste, the strength at 1 to 2% moisture content is between 8 and 10 kN and the strength at about 4% moisture content is about 5 to 6 kN, with the strengths at 19% paper-waste being slightly higher than those at 9.6% paper-waste.

### Example 5

In order to determine the resistance of the lignin binder to degradation in the furnace prior to melting, the following test is conducted.

Briquettes are formed in the same manner as in the preceding examples from waste from mineral wool production and calcium lignosulphonate.

The strength of the briquettes is observed as the temperature is raised up to 1,200°C.

The main, and only important, deterioration in strength starts to occur in the range 1,135 to 1,190°C, which is about the same as for briquettes bonded with conventional hydraulic binder. Accordingly the briquettes start to collapse at about the same temperature as significant melting occurs (usually at least 1,100°C or 1,200°C or higher). As a result the charge does not collapse above the melting region but retains its open particulate nature until it has reached the melting zone in the furnace. There is a minor drop in strength at about 800°C but this does not result in degradation of the briquettes.

The preferred briquettes undergo significant deterioration in strength only at temperatures above 1,000°C and usually at or above 1,100°C, even though the binder is organic.

In this respect, it may be helpful that the moist mix which is subjected to compression moulding contains a mixture of elements including (measured by weight as oxides) substantial amounts of SiO₂ (usually above 40% or above 50%) with alkaline earth and/or alkali metal oxides (usually above 20% or above 30%), together with some polyvalent metal oxides such as FeO, Al₂O₃ and TiO₂ (usually above 1% but below 15% and usually below 10%). The amount of CaO + MgO is often 20% to 50%. The amount of CaO is often 15 to 35%.

It is surprising that these novel lignin-bonded briquettes retain their integrity to such high temperatures and that any degradation at lower temperatures does not lead to significant collapse.

### Example 6

Briquettes are formed by the same technique from 15% waste from the production of rock wool, 26% quartz sand, 10% olivine sand, 18% dolomite, 26% lime, 5% seaweed waste, and lignin binder. The analysis of the product (measured by weight as oxides) is

| SiO₂ | Al₂O₃ | TiO₂ | FeO | CaO | MgO | Na₂O | K₂O |
|---|---|---|---|---|---|---|---|
| 49.47 | 0.84 | 0.27 | 0.82 | 31.16 | 15.65 | 0.32 | 0.46 |

## Claims

1. A process of making MMV fibres having low Al₂O₃ content comprising forming a melt by melting in a furnace a self supporting column of solid coarse mineral material comprising moulded briquettes of particulate mineral material and forming fibres from the melt, characterised in that the melt and the fibres have a content, measured as oxides, of below 4% by weight Al₂O₃, and at least 50% by weight of the mineral material is lignin-bonded briquettes which have a content of below 4% Al₂O₃ and which have been made by compression moulding a particulate mineral material, having a size at least 90% below 2mm, with a binder that is substantially free of aluminium and that comprises lignin binder in an amount of 1 to 10% based on the total weight of the mix of lignin binder solution and particulate material.

2. A process according to claim 1 in which the compression moulding is by roller moulding.

3. A process according to claim 1 or claim 2 in which the lignin-bonded briquettes have been made by compression moulding at 10-50 kN/line cm..

4. A process according to any preceding claim in which the lignin-bonded briquettes have been made by mixing particulate mineral material with the binder in the presence of water, allowing the binder to start to stiffen and then moulding the stiffened mixture under pressure.

5. A process according to claim 4 in which the stiffening was caused by mixing using heated mixers and/or while heating the mixture by indirect heat exchange.

6. A process according to any preceding claim in which at least 80% by weight of the particulate mineral material from which the lignin-bonded briquettes are made has a particle size below lmm.

7. A process according to any preceding claim in which the binder was mixed with the mineral material while heating the mixture and crushing some or all of the mineral material to the desired particle size using a rod mill.

8. A process according to any preceding claim in which at least 70% by weight of the components of the inorganic material in the lignin bonded briquettes are materials which have a melting temperature of above 1450°C.

9. A process according to any preceding claim in which the MMV fibres are made by pouring the melt on to a first spinning rotor from which the melt is thrown in sequence on to one or more subsequent spinning rotors off which the fibres are thrown.

10. A process according to any preceding claim in which the binder consists substantially only of lignin.

11. A process according to any preceding claim in which the lignin is calcium lignosulphonate.

12. A process according to any preceding claim in which the mix from which the briquettes were formed includes fibres.

13. A process according to any preceding claim in which the briquettes substantially retain their strength in the furnace until melting occurs, the melt temperature is at least 1,100°C, and the mix from which the briquettes are formed includes substantial amounts (measured by weight of oxides) of SiO₂ (preferably above 40%) and alkaline earth and/or alkali metal oxides (preferably 20 to 50% CaO + MgO).

14. A process according to any preceding claim in which the mix from which the briquettes are formed includes vegetable fibres.

15. A process according to any preceding claim in which the fibres have the composition, by weight of oxides, 45-60% SiO₂, 0.5-4% Al₂O₃, 0.1-4% TiO₂, 5-12% FeO, 10-25% CaO, 8-18% MgO, 0-4% Na₂O, 0-2% K₂O, 0-6% Na₂O + K₂O, 2-10% P₂O₅ and 0-10% others.

16. A process according to any preceding claim in which the furnace is a cupola furnace.

## Patentansprüche

1. Verfahren zur Herstellung von MMV-Fasern (MMV fibres = man made vitreous fibres = künstliche Glasfasern) mit niedrigem Al₂O₃-Gehalt beinhaltend das Herstellen einer Schmelze durch in einem Ofen Schmelzen einer selbsttragenden Säule aus festem grobem Mineralmaterial mit geformten Briketts aus partikelförmigem Mineralmaterial und das Herstellen von Fasern aus der Schmelze, dadurch gekennzeichnet, daß die Schmelze und die Fasern einen als Oxide gemessenen Gehalt von unter 4 Gew.-% an Al₂O₃ aufweisen und zumindest 50 Gew.-% des Mineralmaterials ligningebundene Briketts sind, die einen Gehalt von unter 4 % Al₂O₃ aufweisen und durch Kompressionsformen eines partikelförmigen Mineralmaterials mit einer Größe von zumindest 90% unter 2 mm mit einem Binder hergestellt worden sind, der im wesentlichen frei von Aluminium ist und Ligninbinder in einer Menge von 1-10 % auf der Basis des Gesamtgewichts der Mischung aus Ligninbinderlösung und partikelförmigen Material enthält.

2. Verfahren nach Anspruch 1, bei dem das Kompressionsformen durch Walzenformen erfolgt.

3. Verfahren nach Anspruch 1 oder 2, bei dem die ligningebundenen Briketts durch Kompressionsformen bei 10-50 kN/Linien-cm hergestellt worden sind.

4. Verfahren nach einem der vorstehenden Ansprüche, bei dem die ligningebundenen Briketts hergestellt worden sind durch Vermischen von partikelförmigem Mineralmaterial mit dem Binder in Anwesenheit von Wasser, den Binder Aussteifen-beginnen-Lassen und dann die angesteifte Mischung unter Druck Formen.

5. Verfahren nach Anspruch 4, bei dem das Ansteifen bewirkt wurde durch Vermischen unter Verwendung geheizter Mischeinrichtungen und/oder unter Heizen der Mischung durch indirekten Wärmeaustausch.

6. Verfahren nach einem der vorstehenden Ansprüche, bei dem zumindest 80 Gew.-% des partikelförmigen Mineralmaterials, aus dem die ligningebundenen Briketts hergestellt werden, eine Partikelgröße unter 1 mm hat.

7. Verfahren nach einem der vorstehenden Ansprüche, bei dem der Binder mit dem Mineralmaterial gemischt wurde, wobei die Mischung geheizt wurde und einiges des oder das gesamte Mineralmaterial auf die gewünschte Partikelgröße unter Verwendung einer Stabmühle zerkleinert wurde.

8. Verfahren nach einem der vorstehenden Ansprüche, bei dem zumindest 70 Gew.-% der Komponenten des anorganischen Materials in den ligningebundenen Briketts Materialien mit einem Schmelzpunkt von über 1450 °C sind.

9. Verfahren nach einem der vorstehenden Ansprüche, bei dem die MMV-Fasern durch Gießen der Schmelze auf einen ersten Schleuderrotor, von dem die Schmelze der Reihe nach auf einen oder mehrere folgende Schleuderrotoren geworfen wird, von denen die Fasern abgezogen werden, hergestellt werden.

10. Verfahren nach einem der vorstehenden Ansprüche, bei dem der Binder im wesentlichen nur aus Lignin besteht.

11. Verfahren nach einem der vorstehenden Ansprüche, bei dem das Lignin Kalziumlignosulfonat ist.

12. Verfahren nach einem der vorstehenden Ansprüche, bei dem die Mischung, aus der die Briketts hergestellt werden, Fasern beinhaltet.

13. Verfahren nach einem der vorstehenden Ansprüche, bei dem die Briketts ihre Festigkeit in dem Ofen im wesentlichen behalten, bis das Schmelzen auftritt, die Schmelztemperatur bei zumindest 1100 °C liegt und die Mischung, aus der die Briketts hergestellt werden, wesentliche Mengen (gemessen anhand des Gewichts der Oxide) von SiO₂ (vorzugsweise über 40%) und Erdalkali- und/oder Alkalimetalloxiden (vorzugsweise 20-50% CaO + MgO) beinhaltet.

14. Verfahren nach einem der vorstehenden Ansprüche, bei dem die Mischung, aus der die Briketts hergestellt werden, Pflanzenfasern enthält.

15. Verfahren nach einem der vorstehenden Ansprüche, bei dem die Fasern, ausgedrückt durch das Gewicht der Oxide, die Zusammensetzung aufweisen: 45-60% SiO₂, 0,5-4% Al₂O₃, 0,1-4% TiO₂, 5-12% FeO, 10-25% CaO, 8-18% MgO, 0-4% Na₂O, 0-2% K₂O, 0-6% Na₂O + K₂O, 2-10% P₂O₅ und 0-10% Rest.

16. Verfahren nach einem der vorstehenden Ansprüche, bei dem der Ofen ein Kuppelofen ist.

## Revendications

1. Procédé de fabrication de fibres vitreuses synthétiques ayant un faible taux d'Al₂O₃ comprenant la formation d'un produit fondu par fusion, dans un four, d'une colonne auto-portante en matière minérale grossière solide comprenant des briquettes moulées à partir d'une matière minérale sous la forme de particules et la formation de fibres à partir du produit fondu, caractérisé en ce que le produit fondu et les fibres ont un taux d'Al₂O₃, mesuré en oxydes, inférieur à 4 % en masse, et en ce qu'au moins 50 % en masse de la matière minérale sont constitués par des briquettes, liées par de la lignine, ayant un taux d'Al₂O₃ inférieur à 4 % et fabriquées par moulage par compression d'une matière minérale sous la forme de particules dont 90 % au moins ont une dimension inférieure à 2 mm, avec un liant pratiquement exempt d'aluminium et comprenant un liant à base de lignine en une quantité de 1 % à 10 % par rapport à la masse totale du mélange constitué par la solution du liant à base de lignine et par la matière en particules.

2. Procédé selon la revendication 1, dans lequel le moulage par compression est un moulage par rouleaux.

3. Procédé selon la revendication 1 ou la revendication 2, dans lequel les briquettes liées par de la lignine ont été fabriquées par moulage par compression à 10 - 50 kN/cm linéaire.

4. Procédé selon une quelconque des revendications précédentes, dans lequel, pour fabriquer les briquettes liées par de la lignine, on a mélangé la matière minérale sous la forme de particules avec le liant en présence d'eau, on a laissé le liant commencer à prendre en masse et on a moulé ensuite le mélange ayant pris en masse sous pression.

5. Procédé selon la revendication 4, dans lequel la prise en masse est induite par un malaxage au moyen de mélangeurs chauffants et/ou par chauffage du mélange par un échange thermique indirect.

6. Procédé selon une quelconque des revendications précédentes, dans lequel au moins 80 % en masse de la matière minérale sous la forme de particules à partir de laquelle on fabrique les briquettes liées par de la lignine ont des particules d'une dimension inférieure à 1 mm.

7. Procédé selon une quelconque des revendications précédentes, dans lequel on mélange le liant avec la matière minérale tout en chauffant le mélange et en concassant tout ou partie de la matière minérale jusqu'à la granulométrie voulue au moyen d'un broyeur à barres.

8. Procédé selon une quelconque des revendications précédentes, dans lequel au moins 70 % en masse des composants de la matière minérale des briquettes liées par de la lignine sont des matières ayant une température de fusion supérieure à 1450°C.

9. Procédé selon une quelconque des revendications précédentes, dans lequel on fabrique les fibres vitreuses synthétiques en versant le produit fondu sur un premier rotor de filage à partir duquel on projette en séquence le produit fondu sur un ou plusieurs autres rotors de filage desquels on récupère les fibres.

10. Procédé selon une quelconque des revendications précédentes, dans lequel le liant est constitué pratiquement uniquement de lignine.

11. Procédé selon une quelconque des revendications précédentes, dans lequel la lignine est du lignosulfonate de calcium.

12. Procédé selon une quelconque des revendications précédentes, dans lequel le mélange à partir duquel sont formées les briquettes contient des fibres.

13. Procédé selon une quelconque des revendications précédentes, dans lequel les briquettes conservent sensiblement leur résistance mécanique dans le four jusqu'à la fusion, la température du produit fondu est d'au moins 1 100°C et le mélange à partir duquel les briquettes sont formées comprend des quantités substantielles (mesurées en masse d'oxydes) de SiO₂ (de préférence plus de 40 %) et d'oxydes de métaux alcalino-terreux et/ou de métaux alcalins (de préférence de 20 à 50 % de CaO + MgO).

14. Procédé selon une quelconque des revendications précédentes, dans lequel le mélange à partir duquel les briquettes sont formées inclut des fibres végétales.

15. Procédé selon une quelconque des revendications précédentes, dans lequel les fibres ont la composition, en masse d'oxydes, de 45 - 60 % de SiO₂, 0,5 - 4 % d'Al₂O₃, 0,1 - 4 % de TiO₂, 5 - 12 % de FeO, 10 - 25 % de CaO,8 - 18 % de MgO, 0 - 4 % de Na₂O, 0 - 2 % de K₂O, 0 - 6 % de Na₂O + K₂O, 2 - 10 % de P₂O₅ et 0 - 10 % d'autres oxydes.

16. Procédé selon une quelconque des revendications précédentes, dans lequel le four est un cubilot.
